# EUROPEAN PATENT APPLICATION

(11) **EP 1 701 565 A1**
(43) Date of publication of application: **13.09.2006**
(21) Application number: 06251052.4
(22) Date of filing: 28.02.2006
(51) Int. Cl.: H04Q 7/36, H04L 12/28

(54) **Method for increasing capacity in a wireless communication system**

(30) Priority: 09.03.2005 US 76288
(71) Applicant: LUCENT TECHNOLOGIES INC., Murray Hill, New Jersey 07974-0636 (US)
(72) Inventor: Li, Shupeng, Edison, NJ 08837 (US); Ozarow, Lawrence Howard, Morris Township, NJ 07960 (US); Ramakrishna, Sudhir, New York, NY 10021 (US); Rudrapatna, Ashok N., Basking Ridge, NH 07920 (US)
(74) Representative: Sarup, David Alexander

(57) **Abstract**

A method is provided for controlling communications between a base station and a mobile device. The method comprises transmitting information between the base station and the mobile device over a plurality of sub-channels where each sub-channel has a different carrier frequency. A first portion of the sub-channels are used for legacy mobile devices, and a second portion of the sub-channels is used by new mobile devices.

## Description

### BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of base stations distributed within an area to be serviced by the system. Various users within the area, fixed or mobile, may then access the system and, thus, other interconnected telecommunications systems, via one or more of the base stations. Typically, a user maintains communications with the system as the user passes through an area by communicating with one and then another base station, as the user moves. The user may communicate with the closest base station, the base station with the strongest signal, the base station with a capacity sufficient to accept communications, *etc.*

In wireless communications systems, each user typically communicates voice and/or data signals with each of the base stations over a single channel. The single channel, however, limits the capacity for communications between the base station and the user. In fact, with the exploding growth of wireless communications, the capacity of the system to handle the number of users and/or the amount of information to be transmitted is limited.

The present invention is directed to overcoming, or at least reducing, the effects of one or more of the problems set forth above.

### SUMMARY OF THE INVENTION

In one aspect of the instant invention, a method is provided for controlling communications between a base station and a mobile device. The method comprises transmitting information between the base station and the mobile device over a plurality of sub-channels where each sub-channel has a different carrier frequency.

### BRIEF DESCRIPTION OF THE DRAWINGS

The invention may be understood by reference to the following description taken in conjunction with the accompanying drawings, in which like reference numerals identify like elements, and in which:
Figure 1 is a block diagram of a communications system, in accordance with one embodiment of the present invention; and
Figure 2 depicts a block diagram of one embodiment of a base station and a user in the communications system of Figure 1.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

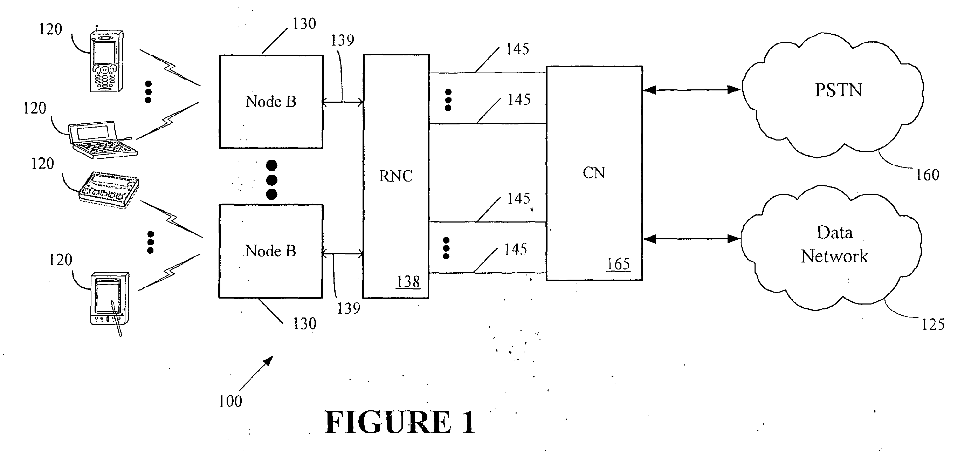

Turning now to the drawings, and specifically referring to Figure 1, a communications system 100 is illustrated, in accordance with one embodiment of the present invention. For illustrative purposes, the communications system 100 of Figure 1 is a Code Division Multiple Access (CDMA), although it should be understood that the present invention may be applicable to other systems that support data and/or voice communications, such as a Universal Mobile Telephone System (UMTS). The communications system 100 allows one or more users 120 to communicate with a data network 125, such as the Internet, through one or more base stations 130. The user 120 may take the form of any of a variety of devices, including cellular phones, personal digital assistants (PDAs), laptop computers, digital pagers, wireless cards, and any other device capable of accessing the data network 125 through the base station 130.

In one embodiment, a plurality of the base stations 130 may be coupled to a Radio Network Controller (RNC) 138 by one or more connections 139, such as T1/EI lines or circuits, ATM circuits, cables, optical digital subscriber lines (DSLs), and the like. Although one RNC 138 is illustrated, those skilled in the art will appreciate that a plurality of RNCs 138 may be utilized to interface with a large number of base stations 130. Generally, the RNC 138 operates to control and coordinate the base stations 130 to which it is connected. The RNC 138 of Figure 1 generally provides replication, communications, runtime, and system management services. The RNC 138, in the illustrated embodiment handles calling processing functions, such as setting and terminating a call path and is capable of determining a data transmission rate on the forward and/or reverse link for each user 120 and for each sector supported by each of the base stations 130.

The RNC 138 is also coupled to a Core Network (CN) 165 via a connection 145, which may take on any of a variety of forms, such as T1/EI lines or circuits, ATM circuits, cables, optical digital subscriber lines (DSLs), and the like. Generally the CN 165 operates as an interface to a data network 125 and/or to a publicly switched telephone network (PSTN) 160. The CN 165 performs a variety of functions and operations, such as user authentication, however, a detailed description of the structure and operation of the CN 165 is not necessary to an understanding and appreciation of the instant invention. Accordingly, to avoid unnecessarily obfuscating the instant invention, further details of the CN 165 are not presented herein.

The data network 125 may be a packet-switched data network, such as a data network according to the Internet Protocol (IP). One version of IP is described in Request for Comments (RFC) 791, entitled "Internet Protocol," dated September 1981. Other versions of IP, such as IPv6, or other connectionless, packet-switched standards may also be utilized in further embodiments. A version of IPv6 is described in RFC 2460, entitled "Internet Protocol, Version 6 (IPv6) Specification," dated December 1998. The data network 125 may also include other types of packet-based data networks in further embodiments. Examples of such other packet-based data networks include Asynchronous Transfer Mode (ATM), Frame Relay networks, and the like.

As utilized herein, a "data network" may refer to one or more communication networks, channels, links, or paths, and systems or devices (such as routers) used to route data over such networks, channels, links, or paths.

Thus, those skilled in the art will appreciate that the communications system 100 facilitates communications between the Users 120 and the data network 125 and/or the PSTN 160. It should be understood, however, that the configuration of the communications system 100 of Figure 1 is exemplary in nature, and that fewer or additional components may be employed in other embodiments of the communications system 100 without departing from the spirit and scope of the instant invention.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

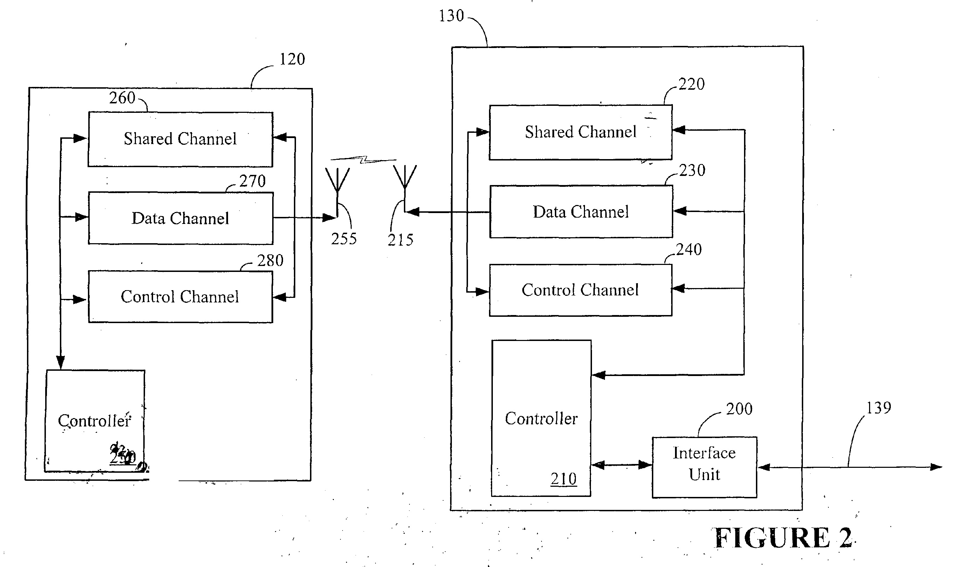

Referring now to Figure 2, a block diagram of one embodiment of a functional structure associated with an exemplary base station 130 and user 120 is shown. The base station includes an interface unit 200, a controller 210, an antenna 215 and a plurality of channels: a shared channel 220, a data channel 230, and a control channel 240. The interface unit 200, in the illustrated embodiment, controls the flow of information between the Node B 130 and the RNC 138 (see Figure 1). The controller 210 generally operates to control both the transmission and reception of data and control signals over the antenna 215 and the plurality of channels 220, 230, 240 and to communicate at least portions of the received information to the RNC 138 via the interface unit 200.

The user 120 shares certain functional attributes with the base station 130. For example, the user 120 includes a controller 250, an antenna 255 and a plurality of channels: a shared channel 260, a data channel 270, and a control channel 280. The controller 250 generally operates to control both the transmission and reception of data and control signals over the antenna 255 and the plurality of channels 260, 270, 280.

Normally, the channels 260, 270, 280 in the user 120 communicate with the corresponding channels 220, 230, 240 in the base station 130. Under the operation of the controllers 210, 250, the channels 220, 260; 230, 270; 240, 280 are used to effect a controlled scheduling for communications from the user 120 to the base station 130.

Here-to-fore, operation of the channels 260, 270, 280 in the user 120 and the corresponding channels 220, 230, 240 in the base station 130 have been time slot operated. For example, in each forward link (FL) time slot, control information meant for all of the users 120 connected to the base station 130 is transmitted, in addition to user data for at least a portion of those users 120, all from a single base station antenna. The control information may include a pilot channel, which is used by the user 120 to make measurements and provide feedback on the signal quality. Transmissions of the control information and user data are time-multiplexed over the time slot duration (henceforth referred to as the control portion (CP) and data portion (DP) of the time slot, respectively). Within the CP, the pilot channel and the rest of the control information are time-multiplexed. The signal transmissions occur over a fixed total bandwidth centered on a single carrier frequency.

Similarly, in each reverse link (RL) time slot, each user 120 transmits information asynchronously using CDMA as the air interface access technology. The RL transmissions occur over a fixed bandwidth centered on a single carrier frequency, non-overlapping with the bandwidth used for FL transmissions.

In one embodiment of the instant invention, one or more of the channels 260, 270, 280 in the user 120 and the corresponding channels 220, 230, 240 in the base station 130 may employ a flexible bandwidth. Further, each channel may be comprised of a plurality of sub-channels, each sub-channel having its own carrier frequency and being capable of substantially simultaneously carrying information thereon. In some embodiments of the instant invention, it may be useful to design the system to operate with legacy users that are not configured to transmit and/or receive information on a plurality of sub-channels or bands.

In one embodiment of the instant invention, the FL time slots may have the same duration and the same alignment with respect to a global time reference as the time slots in the FL of the above-referenced legacy system. The new FL, however, may occupy a variable bandwidth. In one aspect of the instant invention, transmissions of user data on the FL in the new time slots to the users 120 may occupy a variable bandwidth, which may consist of a plurality of sub-bands, where each sub-band is centered on a separate carrier frequency. To maintain operability with respect to legacy users 120, control information directed to the legacy users 120 may be transmitted in each new time slot (where one or more control channel is targeted for each user 120), and over the same time portion of the new time slots as the CP in the legacy time slots.

In another aspect of the instant invention, the FL frequency bandwidth may be comprised of an integral number of sub-bands, with each sub-band having a bandwidth equaling the fixed bandwidth of the legacy FL. On each sub-band, the FL is time slotted, with the duration and alignment with respect to a global time reference of the new time slots being the same as those of the legacy time slots. The FL transmissions on all the sub-bands are time aligned in that the respective time slots are transmitted simultaneously. In this aspect, transmissions of the control information to the legacy users may be restricted to a subset of the FL sub-bands. On the sub-bands on which such control information is transmitted, it is transmitted in every slot, and in the same position in the time slot as in the time slots of the legacy FL. In this aspect, the time slots on one or more (and in some applications, all) of the sub-bands may be used simultaneously to transmit to the new users 120.

In some applications of the instant invention, it may be useful to have the sub-bands of the FL contiguous over the FL frequency bandwidths. In other applications, the sub-bands may be non-contiguous.

With respect to transmissions of user data, the FL time slots in the new system may be segregated, with a first portion of the time slots being reserved for user data transmissions to legacy users 120, and a second portion of the time slots available for data transmissions to the new users 120. For example, in the data portion of the time slots reserved for the legacy users 120, data for legacy users 120 is transmitted. Similarly, in the data portion of the time slots available for the new users 120, data for the new users is transmitted. Those skilled in the art will appreciate that the allocation of time slots to legacy and new users 120 may vary over time.

In one embodiment of the instant invention, transmissions to the new users 120 in the new FL time slots (over at least the data portion of the time slot) may be accomplished by the base station 130 using any of a variety of known air interface techniques. For example, CDMA, orthogonal frequency division multiplexing (OFDM), time division multiple access (TDMA), and the like may be employed. The segregation of the FL time slots of the new system with respect to user data transmissions ensures that the actual air interface technology used to transmit to the new users 120 has no significant effect on the FL transmissions to the legacy users 120. Moreover, it should be appreciated that the base station 130 may use different air interface transmission techniques for transmissions to the new users 120 on each of the different sub-bands.

To enhance transmissions to the new users 120 on the new FL time slots, the base station 130 may employ a variable number of transmit antennas or beams. Likewise, the users 120 may also employ multiple receiving antennas or beams. The use of the term transmit beam herein is intended to imply a signal formed by a composition of signals originating from a plurality of antennas, but which may be detected as a single transmit signal by an intended receiver. In the context of the instant invention, an array of antennas can transmit an array of beams, and transmit antenna is used synonymously with transmit beam. Those skilled in the art will appreciate that the new users 120 may employ a variable number of receive antennas to receive a transmit beam.

In one embodiment of the instant invention, it may be useful to take advantage of the presence of the plurality of transmit antennas on the base station 130 by transmitting a plurality of secondary pilot channels from each of the transmit antennas/beams as an enabler for the user 120 to make measurements and report back information to the base station 130 on the signal quality of the various transmit antennas/beams. These metrics could be either a set or a single scalar quantity. Further, it may be desirable to only transmit these secondary pilot channels from the new time slots in a time period outside of the CP of the new time slot.

To utilize the presence of the plurality of transmit antennas, in transmissions of data to the new users 120, the base station 130 may employ a multi-antenna transmission scheme designed to lead to superior performance and increased spectral efficiency and peak rates. The new users 120 may use multiple receive antennas to receive and process such transmitted information. For example, multi-antenna schemes such as selection transmit diversity (transmitting to users 120 from only one or a subset of antennas or beams), transmit diversity (transmitting a space-time coded signal from multiple transmit antennas), closed-loop transmit diversity (beam-forming signal from multiple antennas to achieve increased gain at the receiver with or without the assistance of feedback from the users 120), MIMO-Code reuse (transmitting multiple data streams simultaneously to the users 120 to increase data rates), and fixed beam with beam switching may be employed.

Turning now to the reverse link (RL), the new users 120 may be configured to make RL transmissions and the base stations 130 may be configured to receive the RL transmission on the same bandwidth using the same signaling format and air interface technology as the legacy users 120. Likewise, the new users 120 may be capable of receiving FL transmissions and the base stations 130 may be capable of making FL transmissions on the same bandwidth, and using the same signaling format and air interface access technology as the legacy users 120 and the base stations 130.

On the RL, the transmissions from the new users 120 to the new base stations may occupy a variable bandwidth, which may consist of a plurality of sub-bands, with each sub-band centered on a different carrier frequency. In one embodiment of the instant invention, the RL frequency bandwidth may consist of a plurality of sub-bands, with each sub band centered on a different carrier frequency, and with each sub-band having the same bandwidth as the bandwidth of the legacy RL. The new users 120 may be configured to transmit information on one or more (including all) of the sub-bands substantially simultaneously. The sub-bands that make up the total RL bandwidth may or may not be contiguous.

The new users 120 may use any of a variety of air interface technologies during RL transmissions, as discussed above in conjunction with FL transmissions made by the base stations 130. Likewise, the new users 120 may use different air interface technologies on the various sub-bands making up the RL bandwidth.

The new users 120 may use multiple transmit antennas or beams and utilize a multi-antenna transmission scheme, as discussed above in conjunction with multi-antenna arrangements used by the base stations 130. The base stations 130 may likewise use multiple receive antennas or beams to receive and process such transmission from the new users 120.

Those skilled in the art will appreciate that transmissions on both the FL and RL may be performed in either the multi-carrier (MC) mode or in the direct spread (DS) mode. In the MC mode, transmissions may be split into a plurality of streams, one for each carrier or sub-channel.

In the DS mode, transmissions may occur in one stream across the entire bandwidth. Further, a first portion of the carriers or sub-channels may use the MC mode to make transmissions, while a second portion of the carriers or sub-channels may use the DS mode to make transmissions. It should be appreciated that the DS and MC modes may be used substantially simultaneously in the various sub-channels.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the control units cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. It is therefore evident that the particular embodiments disclosed above may be altered or modified and all such variations are considered within the scope and spirit of the invention. Accordingly, the protection sought herein is as set forth in the claims below.

## Claims

1. A method for controlling communications between a base station and a mobile device, comprising:
transmitting information between the base station and the mobile device over a plurality of sub-channels where each sub-channel has a different carrier frequency.

2. A method, as set forth in claim 1, wherein transmitting information between the base station and the mobile device over the plurality of sub-channels further comprises transmitting information over a first portion of the plurality of sub-channels to a first type of mobile device, and transmitting information over a second portion of the plurality of sub-channels to a second type of mobile device.

3. A method, as set forth in claim 2, wherein transmitting information over the first portion of the plurality of sub-channels to the first type of mobile device further comprises transmitting information over the first portion of the plurality of sub-channels to a legacy type of mobile device.

4. A method, as set forth in claim 3, wherein transmitting information over the first portion of the plurality of sub-channels to a legacy type of mobile device further comprises transmitting information over the first portion of the plurality of sub-channels using a time slot substantially similar in duration and alignment to that used during prior communications with the legacy mobile device.

5. A method, as set forth in claim 2, wherein transmitting information over the second portion of the plurality of sub-channels to the second type of mobile device further comprises transmitting information over the second portion of the plurality of sub-channels to a non-legacy type of mobile device.

6. A method, as set forth in claim 5, wherein transmitting information over the second portion of the plurality of sub-channels to a non-legacy type of mobile device further comprises transmitting information over a first one of the second portion of the plurality of sub-channels using a first air interface technique, and transmitting information over a second one of the second portion of the plurality of sub-channels using a second air interface technique.

7. A method, as set forth in claim 6, wherein transmitting information over the second one of the second portion of the plurality of sub-channels using the second air interface technique further comprises transmitting information over the second one of the second portion of the plurality of sub-channels using one of CDMA, OFDM and TDMA.

8. A method, as set forth in claim 1, wherein transmitting information between the base station and the mobile device over the plurality of sub-channels further comprises transmitting information over a plurality of antennas between the base station and the mobile device over the plurality of sub-channels.

9. A method, as set forth in claim 9, wherein transmitting information over the plurality of antennas between the base station and the mobile device over the plurality of sub-channels further comprises transmitting information over the plurality of antennas between the base station and the mobile device over the plurality of sub-channels using a multi-antenna transmission scheme.

10. A method, as set forth in claim 10, wherein transmitting information over the plurality of antennas between the base station and the mobile device over the plurality of sub-channels using a multi-antenna transmission scheme further comprises transmitting information over the plurality of antennas between the base station and the mobile device over the plurality of sub-channels using at least one of selection transmit diversity, transmit diversity, closed-loop transmit diversity, MIMO-Code reuse, and fixed beam with beam switching.
